# EUROPÄISCHE PATENTSCHRIFT

(11) **EP 1 092 756 B1**
(45) Veröffentlichungstag und Bekanntmachung des Hinweises auf die Patenterteilung: **07.07.2004**
(21) Anmeldenummer: 00710017.5
(22) Anmeldetag: 13.09.2000
(51) Int. Cl.: C09D 17/00, C09D 7/12, C09D 11/02

(54) **Pigmentpräparationen, Verfahren zu ihrer Herstellung und Verwendung**
Pigment compositions, method for production and use
Composition de pigments, leurs procédé de préparation et leurs utilisations

(30) Priorität: 16.10.1999 DE 19950043
(43) Veröffentlichungstag der Anmeldung: 18.04.2001
(73) Patentinhaber: Degussa AG, 40474 Düsseldorf (DE)
(72) Erfinder: Mathias, Hohann Dr., 63796 Kahl (DE); Kleinhenz, Horst, 63538 Grosskrotzenburg (DE); Karl, Alfons Dr., 63584 Gründau (DE); Tauber, Gerd, 63500 Seligenstadt (DE)

(56) Entgegenhaltungen:
- EP-A- 0 744 446
- EP-A- 0 805 191
- EP-A- 0 896 986
- EP-A- 0 962 504
- EP-A- 1 054 045
- EP-A- 1 072 654
- WO-A-00/60015
- DE-A- 19 644 077
- Ullmann's Encyclopedioa of Industrial Chemistry, Wiley-VCH Verlag GmbH &Co.KGaA, Gerard Booth, "Naphthalene Derivatives", Article Online Posting Date: June 15, 2000

## Beschreibung

Die Erfindung betrifft Pigmentpräparationen, ein Verfahren zu ihrer Herstellung und ihre Verwendung.

Pulverpigmente werden zum Einfärben von Thermoplasten eingesetzt. Vorteil der Pulverpigmente ist, daß sie nicht von einem Trägermaterial abhängig sind. Dieser Vorteil wird jedoch-oft auf Kosten der Dispergierbarkeit erzielt.

Zur Verbesserung der Dispergierbarkeit werden die Pigmente mit Harz (DE 2540355) oder mit Polymeren belegt (US 3133893).

Spezielle Trocknungsverfahren sind bekannt aus EP 0036520, wobei feinteilige Pigmente und eine Flüssigkeit, deren kritische Temperatur unterhalb der Zersetzungstemperatur des Pigments liegt, unter Druck auf Temperaturen oberhalb der kritischen Temperatur der Flüssigkeit erwärmt und dann entspannt, wobei die Temperatur stets oberhalb der Taulinie der Flüssigkeit gehalten wird.

Außerdem sind Pigmentpräparationen aus EP 0282855 bekannt, die ein organisches Pigment und/oder Ruß und ein Tensid aus der Reihe Alkylbenzolsulfonate oder Sulfobernsteinsäureester enthalten, und die, gegebenenfalls nach Naßzerkleinerung, durch Sprüh- oder Gefriertrocknung aus wäßrigem Medium getrocknet werden. Im Falle der Sulfobernsteinsäureester sind die organischen Pigmente aus einer bestimmten Gruppe ausgewählt.

Die bekannten Verfahren haben den Nachteil, daß die Redispergierbarkeit schlecht ist.

Aufgabe der vorliegenden Erfindung ist es, eine Pigmentpräparation herzustellen, die eine gute Redispergierbarkeit, Fließverhalten, Farbstärke und geringe Staubneigung aufweist.

Gegenstand der Erfindung ist eine Pigmentpräparation, die einen Gasruß und ein Tensid aus der Reihe vernetzte Polyoxyethylenacrylsäure, Alkoholalkoxylate, Fettalkoholpolyglykolether, Ligninsulfonate,
oder Mischungen hiervon enthalten, dadurch gekennzeichnet, daß die wäßriger Dispersion gefriergetrocknet ist.

Als Ruß können bevorzugt Pigmentruße mit einem mittleren Primärteilchendurchmesser von 8 bis 80 nm, vorzugsweise 10 bis 35 nm, und einer DBP-Zahl von 40 bis 200 ml/100 g, vorzugsweise 60 bis 150 ml/100 g, eingesetzt werden. In einer besonders bevorzugten Ausführungsform der Erfindung können Gasruße mit einem mittleren Primärteilchendurchmesser von 8 bis 30 nm, vorzugsweise 10 bis 25 nm, eingesetzt werden.

Die Pigmentpräparation kann ein Polymer enthalten.

Das Polymer kann ein Copolymer, Blockcopolymer, Polyampholyt oder Kammpolymer sein. Das Molekulargewicht Mw des Polymeren kann kleiner 100.000 g/mol, bevorzugt kleiner 10.000 g/mol, sein. Es können Copolymere auf Basis (Meth)acrylsäure mit basischen (Meth)-acrylaten, wie Dimethylaminoethyl(meth)acrylat und Dimethylaminopropyl(meth)-acrylamid und deren quaternären Ammoniumverbindungen sowie weiteren Alkyl- oder Aryl (meth) acrylaten (zum Beispiel C₄₋₃₀-Alkyl (meth) acrylate, Cyclohexyl(meth)acrylat, Benzyl(meth)acrylat, Phenylethyl (meth) acrylat), heterocyclischen (Meth)acrylaten (zum Beispiel Morpholinoethyl(meth)acrylat, N(2-Methacryloyloxyethyl)ethylenharnstoff) oder Hydroxyestern (zum Beispiel 2-Hydroxyethyl(meth)acrylat, Hydroxypropyl(meth)acrylat) oder Alkylpolyethylenglykol (200-2000) (meth) acrylaten (zum Beispiel Methoxypolyethylenglykol750methacrylat) verwendet werden. Als Polyampholyte können wasserlösliche Polymere auf Basis (Meth) acrylsäure, die dispergierende, beziehungsweise pigmentstabilisierende Eigenschaften besitzen und darüber hinaus durch Wechselwirkung mit dem Rußpigmenten eine Diffusion in die Papieroberfläche verhindern sollen, verwendet werden. Als Kammpolymere können Pfropfpolymere mit Emulgatoreigenschaften verwendet werden, die man erhält durch Copolymerisation von hydrophoben, endgruppenfunktionalisierten Makromonomeren mit hydrophilen Monomeren (EP 0 728 780 B1). Die Makromonomeren mit (Meth)acryloylendgruppe werden zum Beispiel aus C₈-C₃₀Alkylmethacrylaten, Cyclohexylmethacrylat oder Benzylmethacrylat hergestellt werden und anschließend mit hydrophilen (Meth)acrylaten (zum Beispiel (Meth) acrylsäure, (Meth)acrylamid, 2-Hydroxyethyl (meth)-acrylat, Hydroxypropyl(meth)acrylat, Dimethylaminoethyl(meth)acrylat und Dimethylaminopropyl(meth)acrylamid und deren quaternären Ammoniumverbindungen). Gleichermaßen geeignet können Blockcopolymere mit gleicher Monomerzusammensetzung verwendet werden.

Als Polymere können Copolymere verwendet werden, die aus Acrylamid-Monomeren und mindestens einem der Monomeren, ausgewählt aus Acrylsäure, Dimethylaminopropylamin, Dimethylaminopropylacrylamid (basisch, neutral, quaterniert), Dimethylaminoethylacrylat oder Dimethylaminoethylmethacrylat hergestellt werden.

Das Polymer kann eine Mischung aus zwei oder mehreren Polymeren sein.

Die Dispersion kann eine Netzmittelkombination aus zwei Netzmitteln enthalten.

In einer Ausführungsform der Erfindung kann eine Kombination aus
a) einer vernetzten Polyoxyethylenacrylsäure und
b) einem Alkoxyethylat, vorzugsweise einem Fettalkoholoxethylat, insbesondere einem Fettalkoholoxyethylat mit 30 Ethylenglykoleinheiten,
eingesetzt werden, wobei das Verhältnis der Tenside a : b = 1 : 1 bis 1 : 10 sein kann.

Die Pigmentpräparation kann 50 bis 99 Gew.-%, vorzugsweise 60 bis 90 Gew.-%, Pigment und/oder Ruß und 1 bis 50 Gew.-%, vorzugsweise 10 bis 40 Gew.-%, Tensid und/oder Polymer enthalten.

Für das Verfahren der Gefriertrocknung sind alle Pigmentdispersionen geeignet, die beim Eingefrieren stabil bleiben und nicht flokkulieren.

Ein weiterer Gegenstand der Erfindung ist ein Verfahren zur Herstellung der Pigmentpräparation, welches dadurch gekennzeichnet ist, daß man die wäßrige Pigmentpräparation, durch Gefriertrocknung trocknet und gegebenenfalls anschließend zerkleinert.

Für die Herstellung der wäßrigen Pigmentpräparation kann man für die Dispergierung Perlmühlen, Ultraschall oder ein Ultra-Turrax verwenden.

Das Gefrieren und Trocknen kann in einer Eiskondensatorkammer erfolgen. Die Einfriergeschwindigkeit kann zwischen 0,01 bis 10 °C/min, vorzugsweise zwischen 0,1 bis 3,0 °C/min, liegen.

Die optimalen Gefriertrocknungsbedingungen sind stark produktabhängig. Die Produkttemperatur kann 10 °C unter dem eutektischen Punkt der Probe liegen. Aus der Produkttemperatur kann sich dann der einzustellende Unterdruck ergeben.

Die erfindungsgemäßen Rußdispersionen können eingesetzt werden zur Einfärbung und/oder Antistatischausrüstung in wasserbasierenden Farben- und Lacksystemen, Dispersionsfarben, Druckfarben, Tintensystemen und Beschichtungssystemen.

Die erfindungsgemäßen Pigmentpräparationen weisen vorteilhafterweise eine höhere Farbstärke auf als die nicht gefriergetrockneten Pigmentpräparationen.

### Beispiele

### Vergleichsbeispiele 1-4 (gemäß EP 0 282 855)

### 1. Vorbereitung der Netzmittellösung

Wasser vorlegen und Lutensit A-LBS beziehungsweise Lutensit A-BO lösen.

### 2. Einarbeiten des Rußes

Farbruß FW 18 beziehungsweise Printex 90 in vorbereitetete Netzmittellösung unter langsamen Rühren (entweder von Hand oder mit langsamen Rührwerk) nach und nach einarbeiten.

### 3. Dispergierung

Die in Punkt 2 vorbereitete Dispersion wird mit Ultraschall dispergiert. In der Zentrifuge können sehr grobe Teilchen von der so erhaltenen Dispersion abgetrennt werden.

Die Zusammensetzung der wäßrigen Rußdispersionen sind in der Tabelle 1 dargestellt.

**Tabelle 1**

| Vergleichsbeispiel Nr. Dispergierung: Ultraschall | 1 | 2 | 3 | 4 |
|---|---|---|---|---|
| Inhaltsstoffe | Gew.-% | Gew.-% | Gew.-% | Gew.-% |
| Farbruß FW 18 | 14,3 | - | 14,3 | - |
| Printex 90 | - | 14,3 | - | 14,3 |
| Lutensit A-LBS | 3 | 3 | - | - |
| Lutensit A-BO | - | - | 5 | 5 |
| Wasser | 82,7 | 82,7 | 80,7 | 80,7 |
| Gesamt | 100 | 100 | 100 | 100 |

Lutensit A-LBS ist ein anionisches Netzmittel

| | |
|---|---|
| Hersteller | BASF |
| Stoffgruppe | Dodecylbenzolsulfonsäure, 58%ig |

Lutensit A-BO ist ein anionisches Netzmittel

| | |
|---|---|
| Hersteller | BASF |
| Stoffgruppe | Dioctylsulfosuccinat, Na-Salz, 60%ig |

### 4. Gefriertrocknung

Bei Einfrieren der Dispersionen tritt eine Flokkulation ein. Dodecylbenzolsulfonsäure und Dioctylsulfosuccinat aus der Gruppe der Alkylbenzolsulfonate beziehungsweise Sulfobernsteinsäureester sind für die Gefriertrocknung ungeeignet.

### Beispiel 1

### 1. Vorbereitung der Netzmittellösung

Wasser vorlegen und unter Erwärmen bis höchstens 60°C Lutensol AO 30 lösen. Nach Abkühlung unter Rühren die entsprechenden Mengen an Hypermer CG 6 und AMP 90 zugeben.

### 2. Einarbeiten des Rußes

Farbruß FW 18 in vorbereitete Netzmittellösung unter langsamem Rühren (entweder von Hand oder mit langsamem. Rührwerk) nach und nach einarbeiten.

### 3. Dispergierung

### Ultraschall

Die in Punkt 2 vorbereitete Dispersion wird mit Ultraschall dispergiert. In der Zentrifuge können sehr grobe Teilchen von der so erhaltenen Dispersion abgetrennt werden.

Die Zusammensetzung der wäßrigen Rußdispersion ist in der Tabelle 2 dargestellt.

**Tabelle 2**

| Beispiel Nr. Dispergierung: Ultraschall | **1** |
|---|---|
| Inhaltsstoffe | **Gew.-%** |
| Farbruß FW 18 | 15 |
| Lutensol AO 30 | 6 |
| Hypermer CG 6 | 2 |
| AMP 90 | 0,2 |
| Wasser | 76,8 |
| Gesamt | 100 |

### 4. Gefriertrocknung

Die Pigmentdispersion wird anschließend gefriergetrocknet (Anlagentyp Alpha 2-4 der Firma Christ).

Das Gefrieren und Trocknen erfolgt in der Eiskondensatorkammer. Die Rußdispersion wird in eine Schale gegeben, wobei die Schichtdicke bei maximal 10 mm liegt. Über die gekühlte Stellfläche wird die Rußdispersion in der Schale abgekühlt und eingefroren. Die Einfriergeschwindigkeit liegt zwischen 0,1 - 3,0 °C/min. Nachdem das Produkt eine Temperatur von -40 °C erreicht hat, beginnt der eigentliche Trocknungsprozess.

Es wird an der Eiskondensatorkammer ein Unterdruck von 2,0 bis 2,5 mbar angelegt und die Stellflächentemperatur auf 6 °C angehoben. Die Produkttemperatur pendelt sich aufgrund des angelegten Unterdruckes von ca. 2 mbar bei -15 °C ein. Der sublimierende Wasserdampf wird am Eiskondensator, dessen Temperatur auf -80 °C gehalten wird, abgeschieden.

Zur Untersuchung der Eigenschaften des gefriergetrockneten Produktes, wird dieses in Wasser gegeben und mit einem Spatel umgerührt (23 g gefriergetrocknetes Produkt in 77 g Wasser). Die Mengenverhältnisse werden so gewählt, daß im Prinzip die Ausgangsdispersion wiederhergestellt wird.

In Tabelle 3 sind die gemessenen Eigenschaften dargestellt.

**Tabelle 3**

| | Vergleichsbeispiel (Ausgangsdispersion ohne Gefriertrocknung) | Beispiel 1 (Gefriertrocknung) |
|---|---|---|
| Mittlere Partikelgröße | 116 nm | 174 nm |
| Farbstärke (Derussol P130 = 100 % Referenz) | 82,4 % | 96,8 % |
| Schwarzzahl My | 241,2 | 240,7 |

Die mittlere Partikelgröße in nm wird mit der Photonen-Korrelations-Spektroskopie bestimmt.

Die Farbstärke wird mit einem geeigneten Spektralphotometer oder Dreibereichs-Farbmeßgerät bestimmt.

Das redispergierte, gefriergetrocknete Produkt zeigt eine deutlich höhere mittlere Partikelgröße und Farbstärke gegenüber der Ausgangsdispersion. Die Stabilität dieser Dispersion ist sehr gut.

Der Farbruß FW 18 ist ein Gasruß mit einer mittleren Primärteilchengröße von 15 nm.

Lutensol AO 30 ist ein nichtionisches Netzmittel.

| | |
|---|---|
| Hersteller | BASF |
| Stoffgruppe | nicht ionisch Alkyloxethylat Fettalkoholoxethylat Fettalkoholoxethylat mit 30 Ethylenglykoleinheiten. |

Hypermer CG 6 ist ein nichtionisches Netzmittel, bestehend aus vernetzter Polyoxyethylenacrylsäure (Hersteller: ICI)

AMP 90 ist ein Amin (Hersteller: Angus Chemie).

## Patentansprüche

1. Pigmentpräparation, enthaltend einen Gasruß und ein Tensid aus der Reihe vernetzte Polyoxyethylenacrylsäure, Fettalkoholpolyglykolether, Alkoholalkoxylate, Ligninsulfonate oder Mischungen hiervon,
**dadurch gekennzeichnet,**
**daß** die wäßrige Dispersion gefriergetrocknet ist.

2. Pigmentpräparation nach Anspruch 1,
**dadurch gekennzeichnet,**
**daß** die Dispersion einen Gasruß einer mittleren Primärteilchengröße von 8 bis 80 nm und einer DBP-Zahl von 40 bis 200 ml/100 g enthält.

3. Pigmentpräparation nach Anspruch 1,
**dadurch gekennzeichnet,**
**daß** die Dispersion einen Gasruß einer mittleren Primärteilchengröße von 8 bis 30 nm enthält.

4. Pigmentpräparation nach Anspruch 1,
**dadurch gekennzeichnet,**
**daß** die Dispersion eine Netzmittelkombination aus zwei Netzmitteln enthält.

5. Pigmentpräparation nach Anspruch 4,
**dadurch gekennzeichnet,**
**daß** die Netzmittel eine Kombination aus
a) einer vernetzten Polyoxethylenacrylsäure und
b) einem Alkyloxethylat
sind.

6. Pigmentpräparation nach Anspruch 4,
**dadurch gekennzeichnet,**
**daß** die Netzmittel eine Kombination aus
a) einer vernetzten Polyoxethylenacrylsäure und
b) einem Fettalkoholoxethylat
sind.

7. Pigmentpräparation nach Anspruch 4,
**dadurch gekennzeichnet,**
**daß** die Netzmittel eine Kombination aus
a) einer vernetzten Polyoxethylenacrylsäure und
b) einem Fettalkoholoxethylat mit 30 Ethylenglykoleinheiten sind.

8. Pigmentpräparation nach Anspruch 7,
**dadurch gekennzeichnet,**
**daß** die Netzmittel in dem Verhältnis a : b = 1 :1 bis 1 : 10 verwendet werden.

9. Verfahren zur Herstellung der Pigmentpräparation nach Anspruch 1,
**dadurch gekennzeichnet,**
**daß** man die wäßrige Pigmentpräparation, durch Gefriertocknung trocknet und gegebenenfalls anschließend zerkleinert.

10. Verwendung der Pigmentpräparation gemäß den Ansprüchen 1 bis 8, zur Einfärbung und/oder Antistatischausrüstung in wasserbasierenden Farben- und Lacksystemen, Dispersionsfarben, Druckfarben, Tintensystemen und Beschichtungssystemen.

## Claims

1. A pigment preparation, containing a channel black and a surfactant from the group of cross-linked polyoxyethylenacrylic acid, fatty alcohol polyglycol ethers, alcohol alkoxylates, lignin sulfonates or mixtures thereof,
**characterised in that**
the aqueous dispersion is freeze-dried.

2. A pigment preparation according to Claim 1,
**characterised in that**
the dispersion contains a channel black with an average primary particle size of 8 to 80 nm and a DBP-index of 40 to 200 ml/100 g.

3. A pigment preparation according to Claim 1,
**characterised in that**
the dispersion contains a channel black with an average primary particle size of 8 to 30 nm.

4. A pigment preparation according to Claim 1,
**characterised in that**
the dispersion contains a wetting agent combination of two wetting agents.

5. A pigment preparation according to Claim 4,
**characterised in that**
the wetting agents are a combination of
a) a cross-linked polyoxyetheylenacrylic acid and
b) an alkyl ethoxylate.

6. A pigment preparation according to Claim 4,
**characterised in that**
the wetting agents are a combination of
a) a cross-linked polyoxyethylenacrylic acid and
b) a fatty alcohol ethoxylate.

7. A pigment preparation according to Claim 4,
**characterised in that**
the wetting agents are a combination of
a) a cross-linked polyoxyethylenacrylic acid and
b) a fatty alcohol ethoxylate with 30 ethylene glycol units.

8. A pigment preparation according to Claim 7,
**characterised in that**
the wetting agents are used in the ratio a : b = 1 : 1 to 1 : 10.

9. A process for preparing the pigment preparation according to Claim 1,
**characterised in that**
the aqueous pigment preparation is dried by freeze-drying and then optionally crushed.

10. Use of the pigment preparation in accordance with Claims 1 to 8, for colouring purposes and/or to provide antistatic characteristics in water-based colouring and lacquer systems, disperse dyes, printing inks, inking systems and coating systems.

## Revendications

1. Composition de pigments contenant un noir de fumée et un agent tensioactif choisi dans la série des acides polyoxyéthylène acryliques réticulés, des éthers d'alcools gras et de polyglycol, des alkoxylates d'alcools, des lignines sulfonates, ou des mélanges de ceux-ci, en dispersion aqueuse,
**caractérisée en ce qu'**
on sèche la dispersion aqueuse par lyophilisation.

2. Composition de pigments selon la revendication 1,
**caractérisée en ce que**
la dispersion contient un noir de fumée ayant une taille de particules primaires moyenne de 8 à 80 nm et un nombre DBP de 40 à 200 ml/ 100 g.

3. Composition de pigments selon la revendication 1,
**caractérisée en ce que**
la dispersion contient un noir de fumée ayant une taille moyenne de particules primaires allant de 8 à 30 nm.

4. Composition de pigments selon la revendication 1,
**caractérisée en ce que**
la dispersion contient une combinaison d'agents mouillants à base de deux agents mouillants.

5. Composition de pigments selon la revendication 4,
**caractérisée en ce que**
les agents mouillants sont une combinaison de :
a) un acide polyoxyéthylène acrylique réticulé, et
b) un alkyloxyéthylate.

6. Préparation de pigment selon la revendication 4,
**caractérisée en ce que**
les agents mouillants sont une combinaison à base de :
a) un acide polyoxyéthylène acrylique réticulé, et
b) un oxyéthylate d'alcool gras.

7. Composition de pigments selon la revendication 4,
**caractérisée en ce que**
les agents mouillants sont une combinaison à base de :
a) un acide polyoxyéthylène acrylique réticulé, et
b) un oxyéthylate d'alcool gras ayant 30 éléments éthylèneglycol.

8. Composition de pigments selon la revendication 7,
**caractérisée en ce qu'**
on utilise les agents mouillants dans le rapport a : b = 1 : 1 à 1 : 10.

9. Procédé de préparation de la composition de pigments selon la revendication 1,
**caractérisé en ce qu'**
on sèche la composition aqueuse de pigments par lyophilisation et éventuellement on la broie ensuite.

10. Utilisation de la composition de pigments conformément aux revendications 1 à 8,
en vue de la mise en couleurs et/ou du garnissage antistatique dans des systèmes de colorants et de laques à base d'eau, des colorants par dispersion des couleurs d'impression, des systèmes d'encres, et des systèmes d'enrobage.
